# FASCICULE DE BREVET EUROPEEN

(11) **EP 3 038 417 B1**
(45) Date de publication et mention de la délivrance du brevet: **20.09.2017**
(21) Numéro de dépôt: 15200968.4
(22) Date de dépôt: 17.12.2015
(51) Int. Cl.: H04W 64/00

(54) **PROCÉDÉ DE VÉRIFICATION D'UNE INFORMATION DE LOCALISATION D'UN TERMINAL CONNECTÉ À UN RÉSEAU CELLULAIRE DE TÉLÉCOMMUNICATIONS**
ÜBERPRÜFUNGSVERFAHREN EINER LOKALISIERUNGSINFORMATION EINES ENDGERÄTS, DAS MIT EINEM MOBILFUNKNETZ VERBUNDEN IST
METHOD FOR VERIFYING LOCATION INFORMATION OF A TERMINAL CONNECTED TO A CELLULAR TELECOMMUNICATIONS NETWORK

(30) Priorité: 24.12.2014 FR 1463336
(43) Date de publication de la demande: 29.06.2016
(73) Titulaire: Orange, 75015 Paris (FR)
(72) Inventeur: COLLET, Yann, 92794 ISSY LES MOULINEAUX CEDEX 9 (FR); DUFOUR, Samuel, 75001 PARIS (FR)
(74) Mandataire: Cabinet Plasseraud

(56) Documents cités:
- US-A1- 2011 250 903
- US-A1- 2012 295 641

## Description

La présente invention appartient au domaine de la localisation de terminaux reliés à un réseau de télécommunications cellulaires. Elle concerne en particulier un procédé de vérification d'une information de localisation, la vérification exploitant un historique des cellules visitées par un terminal.

Cette méthode est particulièrement avantageuse dans le cas de terminaux comportant une carte UICC, pour « *Universal Integrated Circuit Card* » en anglais, dans laquelle est stocké cet historique.

On entend par "carte UICC" toute carte comprenant un microcontrôleur et de la mémoire. Elle peut être utilisée en téléphonie mobile pour stocker les informations spécifiques à l'abonné d'un réseau mobile. La norme ETSI TR 102 216 donne des précisions sur une telle carte UICC. Une carte UICC peut comprendre une application SIM, pour « *Subscriber Identity Module »* en anglais ; USIM, pour « *Universal Subscriber Identity Module »* en anglais ou encore ISIM, pour *« IP Multimedia Services Identity Module »* en anglais.

On entend par « cellule » une zone géographique couverte par au moins une antenne d'un réseau, par exemple de téléphonie mobile. Typiquement, une cellule est couverte par une station de base qui comporte au moins une antenne à partir de laquelle sont reliés des terminaux dudit réseau. Le réseau est par exemple un réseau de téléphonie mobile GSM (*Global System for Mobile communications*), UMTS (*Universal Mobile Telecommunications System*), ou encore LTE (*Long Term Evolution*).

Si la multiplication des terminaux équipés de systèmes de localisation dédiés, de type GPS, pour « *Global Positioning System »* en anglais, a pour conséquence que ces terminaux sont désormais légion, il reste néanmoins de nombreuses applications où il n'est pas pertinent d'intégrer de tels systèmes dédiés aux terminaux. Ainsi, les terminaux de paiement, les téléphones mobiles à bas coûts ou encore divers objets connectés sont reliés à un réseau cellulaire de télécommunication mais ne disposent pas de composants spécifiquement dédiés à leur localisation, notamment en raison de l'encombrement et du coût de ces composants.

La possibilité de localiser un terminal reste toutefois une option très recherchée, quelle que soit l'application envisagée pour ce terminal. Typiquement, cette option peut faciliter la recherche d'un terminal égaré. En outre, un opérateur de réseau cellulaire peut avoir intérêt à connaitre en temps réel la répartition géographique des différents terminaux connectés à son réseau. Ceci peut par exemple lui permettre de calibrer dynamiquement les équipements réseau qu'il administre aux variations de charges sur un territoire donné.

Certains paramètres réseau disponibles au niveau d'un terminal peuvent être utilisés pour localiser ce terminal. Typiquement, l'identifiant de la cellule dans laquelle le terminal est localisé est disponible au niveau d'un terminal relié à un réseau cellulaire et peut être utilisé pour localiser le terminal.

En particulier, lorsque le terminal se déplace d'une cellule à une cellule voisine, l'identifiant de la nouvelle cellule est rapidement disponible au niveau du terminal. On appelle « *handover* », pour transfert intercellulaire en français, la situation dans laquelle le terminal se déplace d'une cellule à l'autre, qu'une communication soit en cours ou non pendant le transfert.

Typiquement, l'identifiant de la cellule est envoyé en mode *« broadcast* », pour « diffusion » en français, par la station de base couvrant la cellule. Les canaux utilisés pour la transmission de cet identifiant sont des canaux de synchronisation, de type SCH, pour *« Synchronization Channel »* en anglais. Les canaux P-SCH (*Primary Synchronization Channel*) ou S-SCH (*Secondary Synchronization Channel*), sont typiquement utilisés pour envoyer l'identifiant de cellule dans un réseau UMTS (*Universal Mobile Telecommunications System*).

On appelle « cellule courante », la cellule dans laquelle est situé un terminal à un instant considéré.

Le terminal peut alors récupérer des coordonnées de localisation de cette cellule courante à partir de l'identifiant de cellule. Pour ce faire, il émet une requête comportant l'identifiant de la cellule courante à destination d'un serveur comportant un référentiel d'identifiants de cellules. Ce référentiel d'identifiants de cellules stocke des coordonnées de localisation pour chaque identifiant de cellule. Une réponse à la requête comportant les coordonnées de localisation de la cellule courante est alors renvoyée par le serveur au terminal.

A partir de ces coordonnées de localisation de la cellule, le terminal peut déterminer approximativement sa localisation. Typiquement, le terminal détermine qu'il est situé dans un voisinage des coordonnées de localisation de la cellule courante. Ces coordonnées de localisation de la cellule courante correspondent fréquemment aux coordonnées de localisation de la station de base couvrant la cellule courante.

Cette solution n'est toutefois pas satisfaisante en termes de fiabilité. Dans de nombreuses situations détaillées ci-dessous, des erreurs sont liées à la récupération de coordonnées de localisation de la cellule courante.

Il est par exemple possible que le référentiel d'identifiants de cellules ne soit pas à jour des identifiants de toutes les cellules du réseau. En effet, au fur et à mesure du déploiement de nouvelles stations de base dans le réseau, de nombreuses nouvelles cellules sont créées et la mise à jour du référentiel n'est pas faite en temps réel. Cette situation peut en particulier conduire à ce que des identifiants de cellule soient associés à de mauvaises coordonnées de localisation.

En outre, les identifiants de cellule sont fréquemment renumérotés ce qui peut rendre obsolète l'ensemble des entrées du référentiel d'identifiants de cellules. Cette renumérotation implique notamment que des coordonnées de localisation transmises par le référentiel peuvent n'avoir rien à voir avec la localisation réelle du terminal considéré. Entre le moment où des cellules sont renumérotées et le moment où le référentiel est mis à jour, les coordonnées de localisation transmises par le référentiel pour ces cellules sont donc totalement fausses.

Il est également possible qu'une antenne mobile événementielle soit mise en place pour couvrir un événement exceptionnel. Cette antenne mobile événementielle fait office de station de base temporaire. Or, la mobilité de cette station de base temporaire rend impossible le stockage de coordonnées de localisation, pour l'identifiant associé à cette station de base temporaire, qui soient actualisées au sein du référentiel. L'identifiant de cellule transmis par cette antenne mobile événementielle ne peut donc pas être associé à des coordonnées de localisation qui correspondent effectivement à la localisation temporaire de l'antenne.

Ainsi, dans les situations précitées où des coordonnées de localisation erronées d'une cellule courante associée à un terminal sont transmises au terminal ou à un serveur, pour être exploitées, la qualité de service perçue par l'utilisateur du terminal ou du serveur est mauvaise. En effet, dans ces situations, les coordonnées de localisation transmises n'ont aucun rapport avec la localisation effective des terminaux considérés.
Le document D1 US 2012295641 divulgue un dispositif de communication sans fil, un dispositif de traitement d'information, un système de communication et une méthode de détermination de position, qui détermine une position d'un dispositif de communication sans fil.
Le document D2 US 2011250903 divulgue des méthodes, produits de programme et systèmes pour la détermination de position sélective.

La présente invention vient améliorer la situation.

### Exposé de l'invention

A cet effet, un premier aspect de l'invention concerne un procédé de vérification d'une information de localisation d'un terminal équipé d'une carte UICC, connecté à un réseau cellulaire de télécommunications, et situé dans une cellule courante, le terminal mémorisant dans la carte UICC un identifiant de la cellule courante et au moins un identifiant d'une cellule précédente dans laquelle le terminal était précédemment situé. Ce procédé comporte les étapes suivantes, mises en oeuvre par un serveur de traitement connecté audit réseau :
- réception des identifiants en provenance du terminal via le réseau de communication ;
- détermination d'une première information de localisation à partir de l'identifiant de la cellule courante ;
- estimation d'une deuxième information de localisation à partir de l'identifiant d'au moins une cellule précédente ;
- détection d'une erreur de localisation si les deux informations de localisation correspondent à des positions géographiques différentes selon un critère déterminé.

Comme évoqué ci-avant, l'information de localisation déterminée à partir de l'identifiant de la cellule courante (désignée ici par "première information de localisation"), peut-être erronée. Pour vérifier la pertinence de cette information, il est possible selon l'invention de la comparer à une deuxième information de localisation estimée à partir d'au moins un identifiant de cellule précédente.

Ainsi, un utilisateur d'information de localisation du terminal considéré, ne se voit plus présenter d'information de localisation qui soit complètement incohérente avec la position effective du terminal. La qualité du service fourni et donc la qualité perçue par cet utilisateur, sont donc sensiblement améliorées.

Par exemple, au moment où les identifiants de cellules sont renumérotés, la première information de localisation déterminée à partir de l'identifiant de la cellule courante ne peut pas correspondre à l'endroit où est effectivement situé le terminal. La comparaison de cette (première) information à une deuxième information de localisation estimée à partir de l'identifiant d'une cellule précédente, permet ainsi de détecter en temps réel que la première information de localisation est erronée.

En particulier, dans le cas d'une renumérotation, il est possible que la deuxième information de localisation soit également erronée. Il est toutefois très improbable que les deux erreurs se compensent et que la première et la deuxième information de localisation correspondent à des positions géographiques similaires.

A noter ici, que dans le cadre de la présente invention un terminal équipé d'une carte UICC peut être un terminal de communication cellulaire tel qu'un téléphone (3G, UMTS, LTE ...), mais également un simple équipement muni d'une carte UICC, sous forme par exemple d'une étiquette électronique (*electronic tag*), servant notamment à surveiller à distance l'équipement. Il peut s'agir par exemple de valises (pour le suivi du transport de bagages dans un aéroport) ou de capteurs de types variés devant être gérés à distance. La présente invention vise donc des applications de géolocalisation de terminaux de télécommunications mais également des applications de gestion ou de surveillance à distance d'équipements variés non téléphoniques (applications de communication machine à machine - M2M).

Dans ce contexte, un utilisateur du procédé de vérification selon l'invention peut être en particulier un utilisateur d'un terminal de téléphonie cellulaire ou bien un employé d'une société de surveillance/gestion à distance d'un ensemble d'objets/équipements munis chacun d'une carte UICC, utilisant les informations fournies par un serveur de traitement selon l'invention.

Dans un mode de réalisation, la première information de localisation comporte un premier ensemble de coordonnées de localisation correspondant à une première zone géographique couverte par la cellule courante. Ces coordonnées de localisation peuvent être directement déterminées à partir de référentiels d'identifiants de cellules, ce qui réduit le temps requis pour la mise en oeuvre de la comparaison d'informations de localisation selon le procédé de vérification de l'invention.

Dans un autre mode de réalisation, la deuxième information de localisation comporte un deuxième ensemble de coordonnées de localisation correspondant à une deuxième zone géographique couverte par les cellules adjacentes à la dernière cellule dans laquelle le terminal était situé. En outre, dans ce mode de réalisation, les deux informations de localisation correspondent à des positions géographiques différentes selon un critère déterminé en fonction de la surface de l'intersection des deux zones géographiques précitées. En particulier, on pourra utiliser une valeur seuil prédéfinie de la surface de ladite intersection en deçà de laquelle les positions géographiques associées respectivement aux informations de localisation sont considérées comme étant différentes.

Il est ainsi possible de moduler la précision souhaitée pour la comparaison en choisissant des valeurs différentes pour la valeur seuil. Plus la valeur choisie est faible, plus la comparaison est précise et donc discriminante.

Alternativement, le critère utilisé peut être directement lié à une identification des coordonnées de localisation. Typiquement, si les coordonnées de localisation renvoyées par le référentiel d'identifiants de cellules correspondent précisément aux stations de bases de cellule, l'erreur est détectée si les coordonnées de localisation théoriques pour la station de base de la cellule courante et les coordonnées de localisation estimées pour cette station de base ne sont pas identiques (par exemple latitude et longitude égales, éventuellement avec un taux d'erreur admissible).

Dans un mode de réalisation, la valeur seuil est choisie pour correspondre à la surface moyenne d'une cellule. Cette situation correspond à une situation moyenne pour la précision souhaitée.

Dans un autre mode de réalisation, le procédé comporte, suite à l'étape de réception des identifiants en provenance du terminal, des étapes de :
- envoi, à un référentiel d'identifiants de cellules, d'une requête pour l'obtention de coordonnées de localisation associées à la cellule courante et de coordonnées de localisation associées à la cellule précédente, la requête comportant l'identifiant de la cellule courante et l'identifiant de la cellule précédente ;
- réception d'une réponse à la requête, la réponse comportant les coordonnées de localisation associées à la cellule courante et les coordonnées de localisation associées à la cellule précédente, et
dans lequel, la première information de localisation est déterminée à partir des coordonnées de localisation associées à la cellule courante, et la deuxième information de localisation est estimée à partir des coordonnées de localisation associées à la cellule précédente.

Il est ainsi possible, grâce notamment à l'utilisation de référentiels d'identifiants de cellules, d'externaliser la gestion des données relatives aux cellules et donc d'utiliser des bases de données pouvant répertorier des données relatives aux cellules du monde entier.

Dans un autre mode de réalisation, le procédé comporte, suite l'étape de détection d'une l'erreur de localisation, une étape de mise à jour du référentiel suivante :
- en cas de détection d'une erreur de localisation, remplacement des coordonnées de localisation associées à l'identifiant de la cellule courante, dans le référentiel, d'identifiant de cellule par la deuxième information de localisation.

En particulier, le procédé peut comporter en outre une étape de transmission de la première information de localisation si aucune erreur de localisation n'est détectée, et une étape de transmission de la deuxième information de localisation si une erreur de localisation est détectée.

Le référentiel est donc corrigé en temps réel. Ainsi, d'une part, le procédé rend possible la détection d'erreurs de localisation et, d'autre part, corrige le référentiel pour que de telles erreurs ne soit pas reproduites, notamment pour des terminaux qui ne mettraient pas en oeuvre le présent procédé.

Dans un mode de réalisation, l'estimation de la deuxième information de localisation est effectuée à partir de coordonnées de localisation associées à la dernière cellule dans laquelle le terminal était situé. Ainsi, une estimation de la localisation du terminal est très facilement disponible même lorsque les coordonnées de la cellule courante ne sont pas disponibles.

Dans un autre mode de réalisation, l'estimation de l'information de localisation comporte les sous-étapes de :
- détermination d'une trajectoire de déplacement du terminal à partir de coordonnées de localisation associées à au moins deux cellules dans lesquelles le terminal était précédemment situé ;
- estimation de la deuxième information de localisation à partir de la trajectoire déterminée.

On entend par « trajectoire de déplacement du terminal », la trajectoire obtenue en reliant les positions géographiques déterminées à partir des identifiants de cellules successivement traversées par le terminal. Plusieurs modèles géométriques peuvent être retenus pour établir la trajectoire de déplacement d'un terminal à travers des cellules.

Un exemple de modèle géométrique est celui d'une droite. Si le déplacement du terminal est rectiligne, la trajectoire que suit le terminal est une droite et l'information de localisation estimée se situe alors dans un voisinage de cette droite.

Un autre exemple de modèle géométrique est celui d'une courbe. D'autres exemples de manières de calculer la trajectoire de déplacement du terminal sont donnés ci-après.

La précision de l'estimation de l'information de localisation est ainsi améliorée. En effet, comme cela est expliqué en détail ci-après, il est pertinent de considérer que la trajectoire du terminal reste constante lorsqu'il passe de la dernière cellule visitée à la cellule courante. Les zones qui ne sont pas conformes à la trajectoire de déplacement sont ainsi écartées et l'estimation de l'information de localisation est donc plus précise.

Un deuxième aspect de l'invention concerne un programme informatique comportant des instructions pour la mise en oeuvre du procédé selon premier aspect de l'invention, lorsque ces instructions sont exécutées par un processeur.

Un troisième aspect de l'invention concerne un serveur de traitement connecté à un réseau cellulaire de télécommunications, pour la vérification d'une information de localisation d'un terminal équipé d'une carte UICC et situé dans une cellule courante, le terminal mémorisant dans ladite carte UICC un identifiant de la cellule courante et au moins un identifiant d'une cellule précédente dans laquelle le terminal était précédemment situé. Conformément à l'invention, le serveur précité comporte au moins un processeur agencé pour effectuer des opérations de :
- réception desdits identifiants en provenance du terminal via le réseau de communication ;
- détermination d'une première information de localisation à partir de l'identifiant de la cellule courante ;
- estimation d'une deuxième information de localisation à partir de l'identifiant d'au moins une dite cellule précédente ;
- détection d'une erreur de localisation si les deux informations de localisation correspondent à des positions géographiques différentes selon un critère déterminé.

Un quatrième aspect de l'invention concerne un système comprenant un serveur de traitement tel que décrit précédemment et un serveur de stockage comportant un référentiel d'identifiants de cellules, connecté par un réseau de communications au serveur de traitement selon le troisième aspect de l'invention, ledit serveur de stockage comportant un processeur agencé pour effectuer des opérations de :
- réception d'une requête pour l'obtention de coordonnées de localisation associées à la cellule courante et de coordonnées de localisation associées à la cellule précédente, la requête comportant l'identifiant de la cellule courante et l'identifiant de la cellule précédente ;
- envoi d'une réponse à la requête, la réponse comportant les coordonnées de localisation associées à la cellule courante et les coordonnées de localisation associées à la cellule précédente, et
dans lequel la première information de localisation est déterminée à partir des coordonnées de localisation associées à la cellule courante, et
la deuxième information de localisation est estimée à partir des coordonnées de localisation associées la cellule précédente.

Un cinquième aspect de l'invention concerne un dispositif de localisation compris dans un terminal équipé d'une carte UICC, le terminal étant connecté à un réseau cellulaire de télécommunications, et situé dans une cellule courante, le terminal mémorisant dans la carte UICC un identifiant de la cellule courante et au moins un identifiant d'une cellule précédente dans laquelle le terminal était précédemment situé.
Selon l'invention, le dispositif de localisation comporte un microcontrôleur agencé pour effectuer les étapes de :
- réception des identifiants en provenance du terminal via le réseau de communication ;
- détermination d'une première information de localisation à partir de l'identifiant de la cellule courante ;
- estimation d'une deuxième information de localisation à partir de l'identifiant d'au moins une dite cellule précédente ;
- détection d'une erreur de localisation si les deux informations de localisation correspondent à des positions géographiques différentes selon un critère déterminé.

Les avantages procurés par un programme informatique, un serveur de traitement, un serveur de stockage, un dispositif de vérification, selon l'invention, sont identiques à ceux, exposés plus haut, en relation avec le procédé de vérification de la localisation d'un terminal, selon l'invention, et ne seront par conséquent pas rappelés ici.

D'autres caractéristiques et avantages de l'invention apparaîtront à l'examen de la description détaillée ci-après, et des dessins annexés sur lesquels:
- la figure 1 illustre un contexte de mise en oeuvre de l'invention, selon un mode de réalisation ;
- la figure 2 est un diagramme illustrant les étapes d'un procédé de vérification d'une localisation, selon un mode de réalisation de l'invention ;
- la figure 3 est un diagramme illustrant les étapes d'estimation et/ou de vérification d'une information de localisation, selon un mode de réalisation de l'invention ;
- la figure 4A est un schéma représentant un ensemble de cellules dans lesquelles le terminal est localisé, selon un premier mode de réalisation de l'invention ;
- la figure 4B est un schéma représentant un ensemble de cellules dans lesquelles le terminal est localisé, selon un deuxième mode de réalisation de l'invention ;
- la figure 5 illustre un microcontrôleur, selon un mode de réalisation de l'invention.

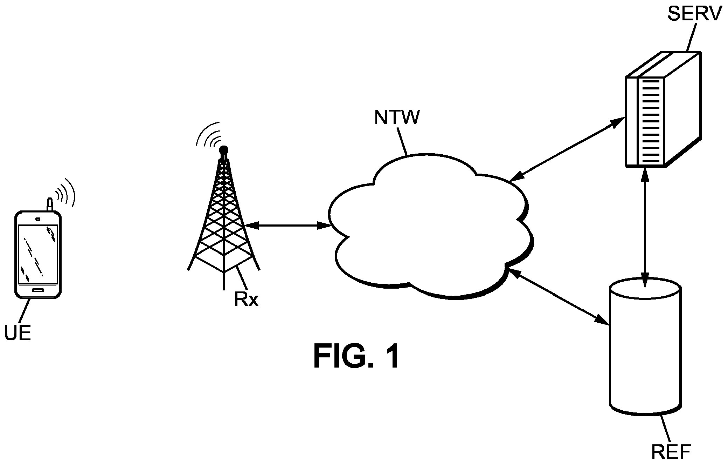

La **figure 1** détaille les différents dispositifs impliqués lorsque l'invention est mise en oeuvre. Sur cette figure, un terminal UE est relié à un réseau NTW via une antenne Rx. Cette antenne Rx est typiquement comprise dans une station de base qui couvre une cellule. Comme évoqué ci-avant le réseau NTW peut être de type GSM, UMTS ou encore LTE. Un serveur de traitement SERV est relié au réseau NTW et à un serveur de stockage comportant un référentiel d'identifiants de cellules REF.

L'invention est décrite ci-après dans son application, non limitative, à la situation dans laquelle le procédé de localisation est mis en oeuvre au niveau du serveur SERV. Le procédé de vérification, et notamment les étapes d'estimation de l'information de localisation, peuvent également être mises en oeuvre au niveau du terminal, au niveau de la station de base ou de tout dispositif relié au réseau NTW.

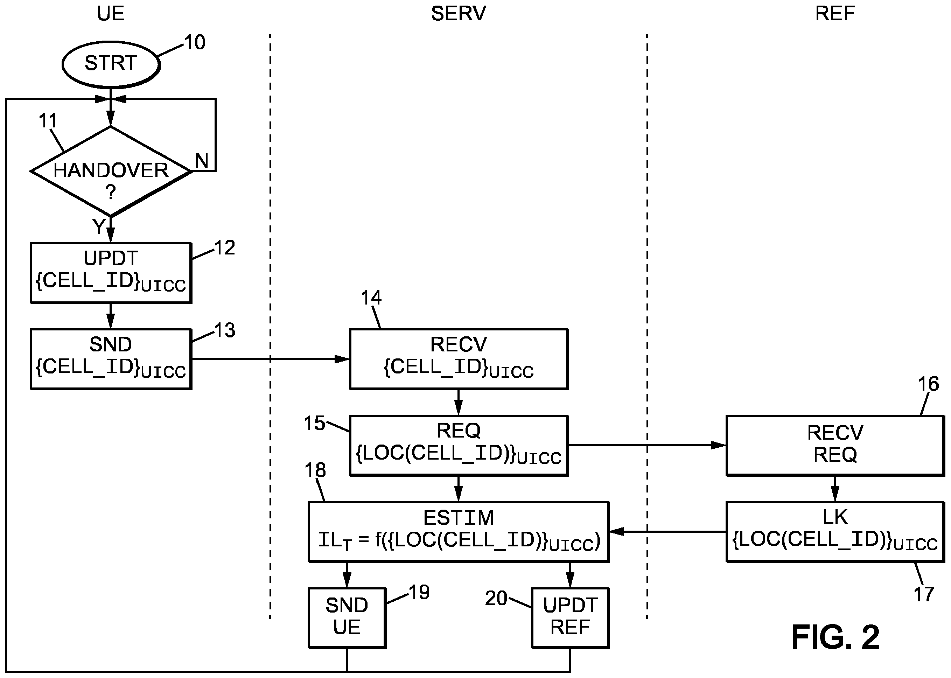

La **figure 2** détaille les étapes mises en oeuvre par le procédé de vérification d'une information de localisation, selon un mode de réalisation.

Le procédé début à une étape 10 à partir de laquelle le terminal UE détecte, au court d'un test 11, si le terminal change de cellule.

Si un changement de cellule est détecté (Y), un nouvel identifiant de cellule est reçu de la station de base couvrant la nouvelle cellule, ici appelée cellule courante. Comme expliqué ci-avant, l'identifiant de la cellule est typiquement envoyé en mode broadcast sur un canal de synchronisation par la station de base couvrant la cellule. Cet identifiant de cellule est alors stocké dans la carte UICC du terminal, à l'étape 12.

La carte UICC comporte les identifiants de plusieurs cellules précédentes, trois par exemple. Ainsi, quand la valeur de la cellule courante est mise à jour dans la carte UICC, à l'étape 12, l'identifiant de la cellule précédente la plus ancienne est supprimé.

A l'étape 13, les identifiants {CELL_ID}_{UICC} de cellule stockés sur la carte UICC sont transmis au serveur SERV. La transmission de ces données peut être faite au moyen du réseau NTW ou via le réseau internet, typiquement lorsque le terminal UE est relié au réseau internet par un câble Ethernet ou une connexion Wi-Fi.

A l'étape 14, les identifiants {CELL_ID}_{UICC} sont reçus par le serveur de traitement SERV. Une requête pour l'obtention de coordonnées de localisation {LOC(CELL_ID}_{UICC} liées aux identifiants {CELL_ID}_{UICC} est alors envoyée, lors d'une étape 15, au référentiel d'identifiants de cellules REF. Le simple fait qu'un identifiant de cellule soit transmis au référentiel permet d'établir que cette cellule existe et qu'elle est active. Le référentiel est donc dynamiquement mis à jour en temps réel de l'apparition de nouvelles cellules.

Les coordonnées de localisation {LOC(CELL_ID)}_{UICC} correspondent aux coordonnées de localisation associées à la cellule courante et aux coordonnées de localisation associées aux cellules précédentes pour lesquelles l'identifiant CELL_ID a été mémorisé dans la carte UICC. La requête comporte l'identifiant CELL_ID_{T} de la cellule courante et les identifiants CELL_ID_{T-1} ; CELL_D_{T-2} ; CELL-ID_{T-3} des cellules précédentes pour lesquelles l'identifiant a été mémorisé dans la carte UICC.

A une étape 16, la requête est reçue par le référentiel REF et les coordonnées de localisation {LOC(CELL_ID)_{UICC} sont extraites du référentiel avant d'être envoyées au serveur SERV lors d'une étape 17.

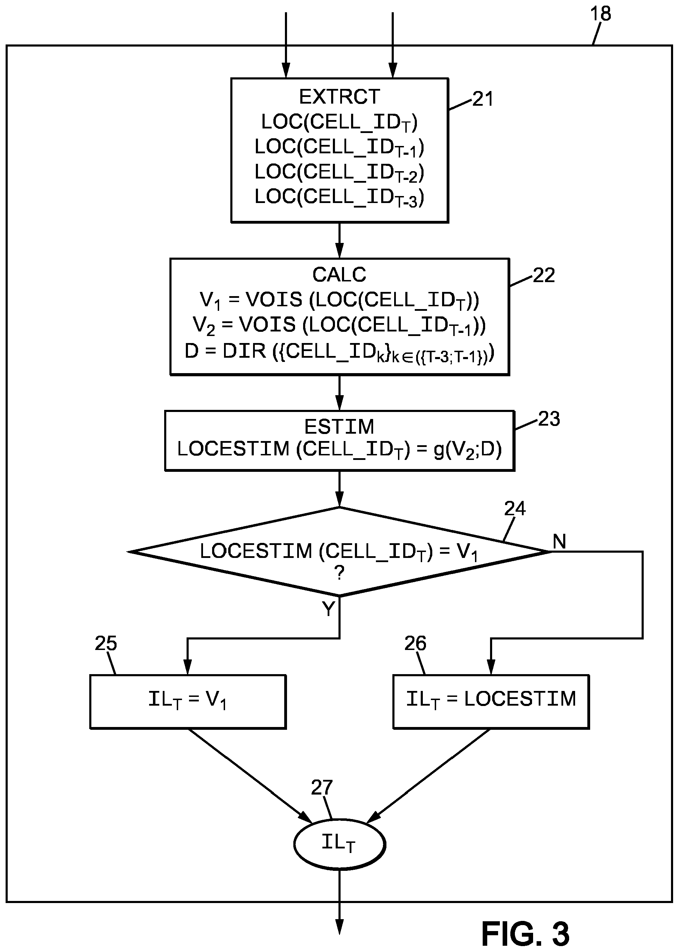

L'information de localisation LOC(CELL_ID) de la cellule courante reçue de REF est alors vérifiée à l'étape 18, par comparaison avec une information de localisation estimée à partir des coordonnées de localisation des cellules précédentes. Le détail de cette étape est donné ci-après en référence à la figure 3. Une information de localisation vérifiée IL_{T} est alors envoyée au terminal UE à l'étape 19 et/ou envoyée, à l'étape 20, au référentiel REF afin qu'il soit mis à jour. Le référentiel est donc corrigé en temps réel. Ainsi, d'une part, le procédé exposé rend possible la détection d'erreurs de localisation et, d'autre part, corrige le référentiel pour que de telles erreurs ne soient pas reproduites, notamment vis-à-vis de terminaux qui ne mettraient pas en oeuvre de procédé de détection d'erreur.

Cette information de localisation correspond à une zone dans laquelle on estime que le terminal est situé. Elle peut prendre différentes formes. Il peut s'agir de coordonnées de localisation, de références auxquelles sont associées des positions géographiques, etc. L'information de localisation peut également comporter des informations supplémentaires relatives à la présence du terminal dans la zone, par exemple la puissance d'émission des antennes du terminal, la fréquence utilisée par ce terminal, le fait que ce terminal soit en itinérance (*roaming*), etc.

En variante, les étapes 14, 15, 18, 19 et 20 sont directement mises en oeuvre par le terminal UE.

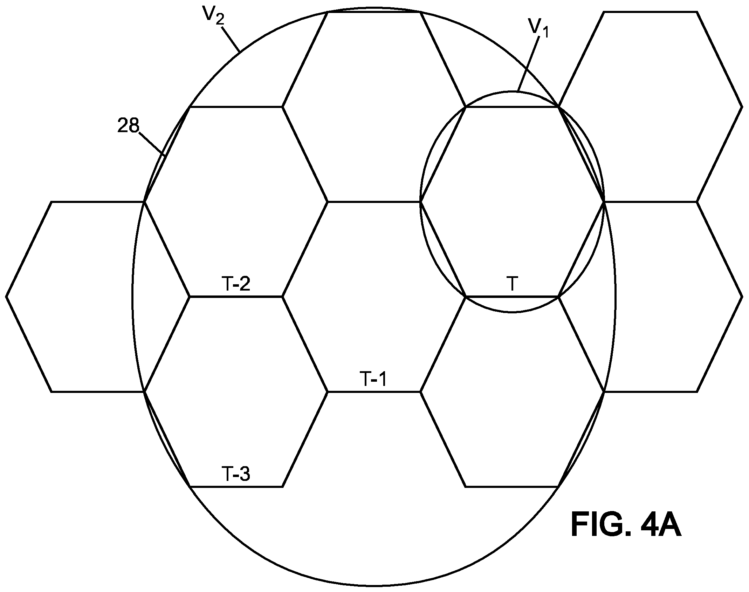

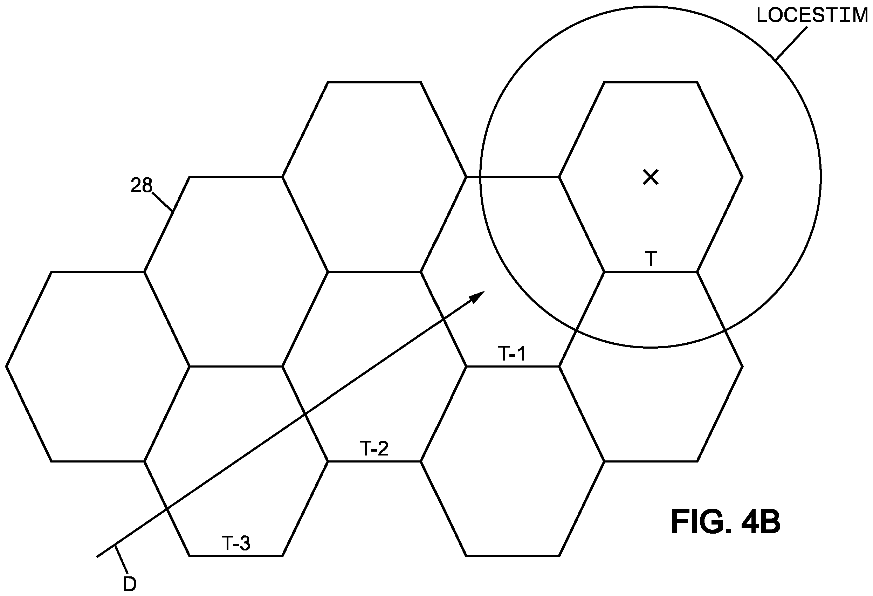

La **figure 3** détaille les étapes mises en oeuvre pour déterminer l'information de localisation vérifiée IL_{T} à l'étape 18. La figure 3 est ici décrite en combinaison avec les **figures 4A** et **4B** qui représentent un ensemble 28 de cellules couvertes par le réseau NTW. On distingue en particulier les cellules T-3, T-2, T-1 et T qui sont, dans ce mode de réalisation, les cellules parcourues par le terminal UE (dans l'ordre : T-3 puis T-2 puis T-1 puis T). La cellule T correspond donc à la cellule courante, la cellule T-1 correspond à la dernière cellule dans laquelle le terminal était situé avant d'être dans la cellule courante, etc.

Les coordonnées de localisation {LOC(CELL_ID)}_{UICC} sont reçues dans le serveur SERV, en provenance du référentiel REF et les identifiants de cellule {CELL_ID}_{UICC} sont reçus du référentiel REF et/ou déjà présentes dans le serveur SERV suite à l'étape de réception 14. A l'étape 21, les coordonnées de localisation LOC(CELL_ID_{T}) de la cellule courante T, les coordonnées de localisation LOC(CELL-ID_{T-1}) de la dernière cellule T-1 et les coordonnées de localisation LOC(CELL-ID_{T-2}), LOC(CELL_ID_{T-3}) des cellules T-2 et T-3 sont extraites.

A l'étape 22, les zones géographiques V₁ et V₂ ainsi que la trajectoire D sont calculées.

V₁ correspond à la zone géographique couverte par la cellule courante. L'information de localisation associée à V₁ correspond directement à LOC(CELL_ID_{T}), c'est-à-dire aux coordonnées de localisation obtenues du référentiel REF suite à l'envoi de l'identifiant CELL_ID_{T}. La zone V₁ est un exemple de première information de localisation, telle que mentionnée ci-avant et dans les revendications.

La zone V₁ fournit donc directement une information de localisation du terminal puisque V₁ correspond à la localisation de la cellule courante dans laquelle est situé le terminal. Toutefois, il est possible que la zone V₁ soit erronée, typiquement parce que le référentiel REF n'est pas à jour pour l'identifiant CELL_ID_{T} de la cellule courante.

Sur la figure 4A, on a représenté la zone V₁ dans la situation où les coordonnées de localisation transmises par le référentiel REF pour l'identifiant CELL_ID_{T} sont exactes. Dans la situation où ces coordonnées LOC(CELL_ID_{T}) seraient inexactes, V₁ pourrait être représenté n'importe où sur la surface de la terre couverte par le réseau NTW.

V₂ correspond à une zone géographique où l'on estime, uniquement à partir des coordonnées de localisation de T-1, que le terminal peut se situer. Cette zone correspond à un cercle ayant un centre C et un rayon R :
- C peut être situé au centre de la cellule T-1, au niveau de la station de base couvrant la cellule T-1 ou encore au niveau d'une antenne couvrant au moins une partie de la cellule T-1 ;
- R peut être défini tel que R=R_{CELL}+D_{CELL} avec R_{CELL} le rayon moyen d'une cellule et D_{CELL} le diamètre moyen d'une cellule. R peut également être défini tel que R=2D_{CELL}.

Dans la mesure où le terminal est forcément passé de la cellule T-1 à une cellule adjacente à la cellule T-1, le terminal se situe nécessairement dans V₂.

Dans un premier mode de réalisation décrit ici en référence à la figure 4A, V₂ est un exemple de zone géographique associée à la deuxième information de localisation, telle que mentionnée ci-avant et dans les revendications. Les termes « deuxième information de localisation » et « information de localisation estimée » sont donc équivalents. Cette information de localisation est donc directement estimée à partir des coordonnées de localisation LOC(CELL_ID)_{T-1} dans ce premier mode de réalisation.

Sur la figure 4B, la flèche D correspond à une trajectoire de déplacement du terminal qui est obtenue à partir des coordonnées de localisation LOC(CELL-ID_{T-1}), LOC(CELL_ID_{T-2}) et LOC(CELL_ID_{T-3}) respectivement associées aux cellules T-1, T-2 et T-3. La trajectoire D peut être calculée de différentes manières.

Une première manière consiste à trouver un modèle géométrique qui puisse approximer la trajectoire du terminal dans le plan des cellules (ce plan correspond à la surface de la terre). Typiquement, pour trouver ce modèle géométrique, on confronte plusieurs modèles géométriques connus aux coordonnées de localisation des cellules précédentes. Plus le nombre de cellules pour lesquelles on dispose de coordonnées de localisation est important, plus le modèle géométrique choisi donne des résultats exacts, c'est-à-dire s'approchant de la trajectoire effectivement suivie par le terminal.
- Un exemple de modèle géométrique est celui d'une droite. Si le déplacement du terminal est rectiligne, la trajectoire que suit le terminal est une droite et l'information de localisation estimée se situe alors dans un voisinage de cette droite. Cet exemple est ici représenté à la figure 4B dans laquelle l'étude des coordonnées de localisation des cellules T-1, T-2 et T-3 visitées par le terminal montre que la trajectoire suivie par ce terminal est une droite.
- Un autre exemple de modèle géométrique est celui d'une courbe.

Une seconde manière de déterminer une trajectoire de déplacement du terminal consiste à prendre en compte des données de contexte pour construire un modèle contextuel de déplacement du terminal.
- Un exemple typique de modèle contextuel est celui qui prend en compte des données cartographiques intégrant les différentes voies de transport (routes, voies ferrées, voies fluviales, etc.) ou encore des éléments maritimes ou de relief (fleuves sans pont, chaîne de montagne, lac, océan, etc.). Dans cette situation, on peut estimer que le déplacement du terminal est dicté par ces éléments topographiques. Il est par exemple logique que le terminal ne se déplace pas vers une cellule qui n'est pas sur le tracé de la route empruntée par l'utilisateur du terminal ou que le terminal ne se déplace pas dans une zone de montagne qui est inaccessible en train.
- Un autre exemple de modèle contextuel est celui qui prend en compte des données statistiques propres à l'utilisateur du terminal. De telles données statistiques peuvent concerner les habitudes de transport de l'utilisateur (transports en commun, marche, etc.), les caractéristiques physiques de l'utilisateur (personne à mobilité réduite, personne très sportive, etc.) ou encore la vie sociale de l'utilisateur (localisation des habitations des amis de l'utilisateur, lieu d'habitation de l'utilisateur, lieu de travail de l'utilisateur, etc.).

Les deux manières susmentionnées de détermination d'une trajectoire de déplacement du terminal peuvent se combiner, le modèle géométrique peut typiquement être pondéré par des données de contexte. Il est également possible de prendre en compte des données d'ordre technologique relatives au réseau NTW, par exemple. Dans de nombreuses situations, des réseaux de différents types se chevauchent et le recoupement de données entre les différents types de réseau peut par exemple permettre d'affiner un modèle géométrique établi pour modéliser le déplacement du terminal.

A une étape 23, la trajectoire D, qui est donc établie au moins à partir des coordonnées de localisation des cellules précédemment visitées par le terminal, est alors utilisée pour estimer la localisation LOCESTIM du terminal. Cette estimation est fonction (fonction "g") de la trajectoire D et de la zone V₂ où l'on estime que le terminal peut être situé.

Par exemple, sur la figure 4B, en recoupant les données relatives à la trajectoire D du terminal et les données relatives à la dernière cellule visitée, on peut estimer que le terminal se situe dans la zone géographique LOCESTIM. Cette zone LOCESTIM est plus précise que la zone V₂ (figure 4A).

Dans un second mode de réalisation, en référence à la figure 4B, la deuxième information de localisation correspond à l'ensemble des coordonnées de localisation qui permettent de définir la zone LOCESTIM.

Le calcul de la zone LOCESTIM peut également prendre en compte une mesure de durée entre deux changements de cellules successifs. En effet, la durée écoulée entre le changement de cellule T-2 vers T-1 et le changement cellule T-1 vers T, peut être mesurée.

En calculant la distance parcourue entre le moment où le changement de cellule est détecté et le moment où l'information de localisation est envoyée au terminal (étape 19, figure 2, décrite ci-après) il est possible d'affiner la position estimée pour le terminal. Cette distance est déterminée par un calcul de type : distance = vitesse x temps. La vitesse est déterminée à partir de la mesure de durée entre les deux changements de cellule, si le rayon moyen d'une cellule est connu. Alternativement, si la vitesse est connue, il est possible de calculer le rayon de la cellule T-1.

Dans une variante de ce second mode de réalisation, l'importance de la surface (étalement) occupée par la zone LOCESTIM dépend d'un écart entre les coordonnées de localisation associées aux cellules précédentes et le modèle choisi pour modéliser la trajectoire D.

L'écart entre les coordonnées de localisation associées aux cellules précédentes et le modèle géométrique est caractéristique de la fiabilité de l'estimation de l'information de localisation. Cet écart peut correspondre :
- à une distance moyenne entre les coordonnées de localisation associées aux trois cellules précédentes et des coordonnées de localisation calculées selon le modèle géométrique ;
- à un pourcentage de coordonnées de localisation non-conformes au modèle géométrique.

On peut utiliser cependant toute autre manière d'estimer la pertinence du modèle géométrique par rapport aux coordonnées de localisation obtenues à partir des identifiants de cellule.

A une étape 24, un test est effectué pour savoir si l'information estimée de localisation à laquelle est associé la zone LOCESTIM et l'information théorique de localisation à laquelle est associée la zone V₁ correspondent à des positions géographiques différentes.

On considère que les deux informations de localisation (estimée et théorique) auxquelles sont associées les zones géographiques (respectivement LOCESTIM et V₁) correspondent à des positions différentes quand la surface de l'intersection des deux zones est inférieure à une valeur seuil. Cette valeur seuil est typiquement choisie pour correspondre à la surface moyenne d'une cellule.

Si les positions géographiques correspondent, l'information théorique de localisation associée à V₁ est considérée comme étant exacte. Dès lors, cette information de localisation est retenue, à l'étape 25, comme information de localisation IL_{T} vérifiée.

Si les positions géographiques diffèrent, l'information théorique de localisation associée à V₁ est une information de localisation erronée. Dès lors, cette information de localisation ne peut être retenue. L'information estimée de localisation associée à LOCESTIM est donc retenue, à l'étape 26, comme information de localisation IL_{T} vérifiée.

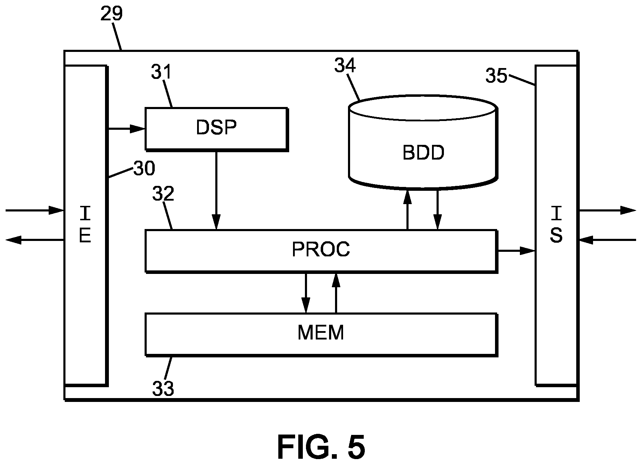

La **figure 5** représente un exemple de dispositif 29 pour la mise en oeuvre de tout ou partie des étapes du procédé décrit ci-avant. Ce dispositif peut par exemple être compris dans le serveur de traitement SERV ou directement dans le terminal UE pour effectuer les étapes 14, 15, 18, 19 et 20. Ce dispositif 29 peut prendre la forme d'un boitier comprenant des circuits imprimés, de tout type d'ordinateur ou encore d'un téléphone mobile.

Le dispositif 29 comprend une mémoire vive 33 pour stocker des instructions pour la mise en oeuvre par un processeur 32 d'un procédé de localisation d'un terminal et de vérification d'informations de localisation, tel que décrit ci-avant. Le dispositif comporte aussi une mémoire de masse 34 pour le stockage de données destinées à être conservées après la mise en oeuvre d'un procédé de localisation/vérification selon l'invention.

Le dispositif 29 peut en outre comporter un processeur de signal numérique (DSP) 31. Ce DSP 31 reçoit des données d'entrées telles que les identifiants de cellule pour mettre en oeuvre un traitement de ces données conforme à un procédé de vérification d'informations de localisation, selon l'invention.

Le dispositif comporte également une interface d'entrée 30 pour la réception des données comprises sur la carte UICC et une interface de sortie 35 pour la transmission de l'information de localisation estimée et/ou vérifiée.

La présente invention ne se limite pas aux formes de réalisation décrites ci-avant à titre d'exemples ; elle s'étend à d'autres variantes.

Ainsi, on a décrit ci-avant un mode de réalisation dans lequel la transmission des identifiants était assurée par un lien radiofréquence. Bien sûr, ces transmissions peuvent être assurées par tout type de technique de communication telle que des communications filaires ou optiques.

De plus, dans le mode de réalisation décrit plus haut, un terminal (UE) dont la localisation est vérifiée selon le procédé de l'invention, est équipé d'une carte UICC dans laquelle le terminal mémorise un identifiant (CELL_ID_{T}) de la cellule courante et au moins un identifiant (CELL_ID_{T-1}; CELL_ID_{T-2} ; CELL_ID_{T-3}) d'une cellule précédente dans laquelle le terminal était précédemment situé. Cependant, selon d'autres modes de réalisation, on peut prévoir que le terminal utilise pour la mémorisation des identifiants de cellule précités, un module logiciel et/ou matériel, désigné ici par « module de sécurité », ce module de sécurité étant distinct de la carte UICC.
Par conséquent, de manière générale, un terminal dont la localisation est vérifiée selon le procédé de l'invention, est équipé d'un module de nature matérielle et/ou logicielle, désigné ici par « module de sécurité », dans lequel le terminal mémorise des identifiants de cellule, et selon le mode de réalisation choisi, un tel module de sécurité peut comprendre une carte UICC, ou bien être distinct d'une carte UICC et, dans ce dernier cas, ce module peut être alors configuré pour mettre en oeuvre tout ou partie des fonctionnalités assurées par une carte UICC.

## Revendications

1. Procédé de vérification d'une information de localisation d'un terminal (UE) équipé d'une carte UICC , connecté à un réseau cellulaire de télécommunications, et situé dans une cellule courante, ledit terminal mémorisant dans le module de sécurité un identifiant (CELL_ID_{T}) de la cellule courante et au moins un identifiant (CELL_ID_{T-1}; CELL_ID_{T-2}; CELL_ID_{T-3}) d'une cellule précédente dans laquelle le terminal était précédemment situé,
ledit procédé comportant des étapes, mises en oeuvre par un serveur de traitement (SERV) connecté audit réseau, de :
- réception (14) desdits identifiants en provenance du terminal via le réseau de communication ;
- détermination (22) d'une première information de localisation à partir de l'identifiant de la cellule courante ;
- estimation (23) d'une deuxième information de localisation à partir de l'identifiant d'au moins une cellule précédente ;
- détection (24) d'une erreur de localisation si les deux informations de localisation correspondent à des positions géographiques différentes selon un critère déterminé.

2. Procédé selon la revendication 1 , dans lequel la première information de localisation comporte un premier ensemble de coordonnées de localisation correspondant à une première zone géographique (V₁) couverte par la cellule courante.

3. Procédé selon la revendication 2, dans lequel la deuxième information de localisation comporte un deuxième ensemble de coordonnées de localisation correspondant à une deuxième zone géographique couverte par les cellules adjacentes à la dernière cellule dans laquelle le terminal était situé, et
dans lequel, les deux informations de localisation correspondent à des positions géographiques différentes selon un critère déterminé en fonction de la surface de l'intersection de la première et de la deuxième zone géographique.

4. Procédé selon la revendication 3, dans lequel lesdites première et seconde informations de localisation correspondent à des positions géographiques différentes, lorsque ladite surface d'intersection est inférieure à une valeur seuil prédéfinie.

5. Procédé selon la revendication 4, dans lequel ladite valeur seuil est choisie pour correspondre à la surface moyenne d'une cellule.

6. Procédé selon l'une quelconque des revendications précédentes, comportant en outre, suite à l'étape de réception, des étapes de :
- envoi (15), à un référentiel d'identifiants de cellules (REF), d'une requête pour l'obtention de coordonnées de localisation associées à la cellule courante et de coordonnées de localisation associées à ladite au moins une cellule précédente, ladite requête comportant l'identifiant (CELL_ID_{T}) de la cellule courante et l'identifiant (CELL_ID_{T-1}; CELL_ID_{T-2}; CELL_ID_{T-3}) de ladite au moins une cellule précédente ;
- réception d'une réponse à ladite requête, la réponse comportant les coordonnées de localisation (LOC(CELL_ID_{T})) associées à la cellule courante et les coordonnées de localisation (LOC(CELL_ID_{T-1}); LOC(CELL_ID_{T-2}); LOC(CELL_ID_{T-3})) associées à ladite au moins une cellule précédente, et
dans lequel la première information de localisation est déterminée à partir des coordonnées de localisation associées à la cellule courante, et
la deuxième information de localisation est estimée à partir des coordonnées de localisation associées à ladite au moins une cellule précédente.

7. Procédé selon la revendication 6, comportant en outre, suite à l'étape de détection d'une l'erreur de localisation, une étape de mise à jour du référentiel suivante :
- en cas de détection d'une erreur de localisation, remplacement des coordonnées de localisation associées à l'identifiant de la cellule courante dans le référentiel d'identifiant de cellule par la
deuxième information de localisation.

8. Procédé selon l'une des revendications 6 et 7, comportant en outre une étape de transmission de la première information de localisation si aucune erreur de localisation n'est détectée (25) et une étape de transmission de la deuxième information de localisation si une erreur de localisation est détectée (26).

9. Procédé selon l'une des revendications précédentes, dans lequel l'estimation de la deuxième information de localisation est effectuée à partir de coordonnées de localisation (LOC(CELL_ID_{T})) associées à la dernière cellule dans laquelle le terminal était situé.

10. Procédé selon l'une des revendications précédentes, dans lequel l'estimation de la deuxième information de localisation comporte des sous-étapes de :
• détermination d'une trajectoire de déplacement (D) du terminal à partir de coordonnées de localisation (LOC(CELL_ID_{T-1}); LOC(CELL_ID_{T-2}); LOC(CELL_ID_{T-3})) associées à au moins deux cellules dans lesquelles le terminal était précédemment situé ;
• estimation de la deuxième information de localisation à partir de ladite trajectoire déterminée.

11. **Programme** informatique comportant des instructions pour la mise en oeuvre du procédé selon l'une quelconque des revendications précédentes, lorsque ces instructions sont exécutées par un processeur.

12. **Serveur de traitement** (SERV) connecté à un réseau cellulaire de télécommunications, pour la vérification d'une information de localisation d'un terminal (UE) équipé d'un module de sécurité et situé dans une cellule courante, ledit terminal mémorisant dans ledit module de sécurité un identifiant de la cellule courante et au moins un identifiant d'une cellule précédente dans laquelle le terminal était précédemment situé ; ledit serveur comportant au moins un processeur agencé pour effectuer des opérations de :
- réception desdits identifiants en provenance du terminal via le réseau de communication ;
- détermination d'une première information de localisation à partir de l'identifiant de la cellule courante ;
- estimation d'une deuxième information de localisation à partir de l'identifiant d'au moins une dite cellule précédente ;
- détection d'une erreur de localisation si les deux informations de localisation correspondent à des positions géographiques différentes selon un critère déterminé.

13. Système comprenant un serveur de traitement (SERV) selon la revendication 12 et un **Serveur de stockage** comportant un référentiel d'identifiants de cellules (REF),
connecté par un réseau de communications au serveur de traitement, ledit serveur de stockage comportant un processeur agencé pour effectuer des opérations de :
- réception d'une requête pour l'obtention de coordonnées de localisation associées à la cellule courante et de coordonnées de localisation associées à ladite au moins une cellule précédente, ladite requête comportant l'identifiant (CELL_ID_{T}) de la cellule courante et l'identifiant (CELL_ID_{T-1}; CELL_ID_{T-2}; CELL_ID_{T-3}) de ladite au moins une cellule précédente ;
- envoi d'une réponse à ladite requête, la réponse comportant les coordonnées de localisation (LOC(CELL_ID_{T})) associées à la cellule courante et les coordonnées de localisation (LOC(CELL_ID_{T-1}); LOC(CELL_ID_{T-2}); LOC(CELL_ID_{T-3})) associées à ladite au moins une cellule précédente, et
dans lequel la première information de localisation est déterminée à partir des coordonnées de localisation associées à la cellule courante, et la deuxième information de localisation est estimée à partir des coordonnées de localisation associées à ladite au moins une cellule précédente.

14. **Dispositif** de localisation compris dans un terminal équipé d'un module de sécurité, le terminal étant connecté à un réseau cellulaire de télécommunications, et situé dans une cellule courante, ledit terminal mémorisant dans le module de sécurité un identifiant (CELL_IDT) de la cellule courante et au moins un identifiant (CELL_ID_{T-1}; CELL_ID_{T-2}; CELL_ID_{T-3}) d'une cellule précédente dans laquelle le terminal était précédemment situé ; le dispositif comportant un microcontrôleur agencé pour effectuer des étapes de :
- réception desdits identifiants en provenance du terminal via le réseau de communication ;
- détermination d'une première information de localisation à partir de l'identifiant de la cellule courante ;
- estimation d'une deuxième information de localisation à partir de l'identifiant d'au moins une dite cellule précédente ;
- détection d'une erreur de localisation si les deux informations de localisation correspondent à des positions géographiques différentes selon un critère déterminé.

15. Dispositif selon la revendication 14 , dans lequel ledit module de sécurité est compris dans une carte UICC dudit terminal.

## Patentansprüche

1. Verfahren zur Überprüfung einer Lokalisierungsinformation eines Endgeräts (UE), das mit einer UICC-Karte ausgestattet ist, das an ein zellulares Mobilfunknetz angeschlossen ist und sich in einer aktuellen Zelle befindet, wobei das Endgerät in dem Sicherheitsmodul eine Identität (CELL_ID_{T}) der aktuellen Zelle und mindestens eine Identität (CELL_ID_{T-1}; CELL_ID_{T-2}; CELL_ID_{T-3};) einer vorhergehenden Zelle, in der das Endgerät vorher angeordnet war, speichert,
wobei das Verfahren Schritte umfasst, die von einem Bearbeitungsserver (SERV), der an das Netz angeschlossen ist, eingesetzt werden:
- Empfang (14) der Identitäten von dem Endgerät über das Kommunikationsnetz;
- Bestimmung (22) einer ersten Lokalisierungsinformation auf Basis der Identität der aktuellen Zelle;
- Schätzung (23) einer zweiten Lokalisierungsinformation auf Basis der Identität mindestens einer vorhergehenden Zelle;
- Erfassung (24) eines Lokalisierungsfehlers, wenn die zwei Lokalisierungsinformationen unterschiedlichen geografischen Positionen nach einem bestimmten Kriterium entsprechen.

2. Verfahren nach Anspruch 1, bei dem die erste Lokalisierungsinformation eine erste Gesamtheit von Lokalisierungskoordinaten entsprechend einer ersten geografischen Zone (V₁), die von der aktuellen Zelle abgedeckt ist, umfasst.

3. Verfahren nach Anspruch 2, bei dem die zweite Lokalisierungsinformation eine zweite Gesamtheit von Lokalisierungskoordinaten entsprechend einer zweiten geografischen Zone, die von den Zellen abgedeckt ist, die an die letzte Zelle, in der das Endgerät angeordnet war, angrenzt, umfasst, und bei dem die zwei Lokalisierungsinformationen unterschiedlichen geografischen Positionen nach einem bestimmten Kriterium in Abhängigkeit von der Schnittfläche der ersten und zweiten geografischen Zone entsprechen.

4. Verfahren nach Anspruch 3, bei dem die erste und zweite Lokalisierungsinformation unterschiedlichen geografischen Positionen entsprechen, wenn die Schnittfläche unter einem vordefinierten Schwellenwert liegt.

5. Verfahren nach Anspruch 4, bei dem der Schwellenwert derart gewählt ist, dass er der durchschnittlichen Oberfläche einer Zelle entspricht.

6. Verfahren nach einem der vorhergehenden Ansprüche, ferner umfassend, nach dem Empfangsschritt, die folgenden Schritte:
- Senden (15) einer Anfrage an ein Bezugssystem von Zellidentitäten (REF), um Lokalisierungskoordinaten, die der aktuellen Zelle zugeordnet sind, und Lokalisierungskoordinaten, die der mindestens einen vorhergehenden Zelle zugeordnet sind, zu erhalten, wobei die Anfrage die Identität (CELL_ID_{T}) der aktuellen Zelle und die Identität (CELL_ID_{T-1}; CELL_ID_{T-2}; CELL_ID_{T-3}) der mindestens einen vorhergehenden Zelle umfasst;
- Empfang einer Antwort auf die Anfrage, wobei die Antwort die Lokalisierungskoordinaten (LOC(CELL_ID_{T})), die der aktuellen Zelle zugeordnet sind, und die Lokalisierungskoordinaten (LOC_(CELL_ID_{T-1}); LOC(CELL_D_{T-2}); LOC(CELL_ID_{T-3})), die der mindestens einen vorhergehenden Zelle zugeordnet sind, umfasst, und
bei dem die erste Lokalisierungsinformation auf Basis der Lokalisierungskoordinaten, die der aktuellen Zelle zugeordnet sind, bestimmt wird, und
die zweite Lokalisierungsinformation auf Basis der Lokalisierungskoordinaten, die der mindestens einen vorhergehenden Zelle zugeordnet sind, geschätzt wird.

7. Verfahren nach Anspruch 6, ferner umfassend, nach dem Schritt der Erfassung eines Lokalisierungsfehlers, einen folgenden Schritt der Aktualisierung des Bezugssystems:
- im Falle einer Erfassung eines Lokalisierungsfehlers Ersatz der Lokalisierungskoordinaten, die der Identität der aktuellen Zelle in dem Zellidentitätsbezugssystem zugeordnet sind, durch die zweite Lokalisierungsinformation.

8. Verfahren nach einem der Ansprüche 6 und 7, ferner umfassend einen Schritt der Übertragung der ersten Lokalisierungsinformation, wenn kein Lokalisierungsfehler erfasst wird (25), und einen Schritt der Übertragung der zweiten Lokalisierungsinformation, wenn ein Lokalisierungsfehler erfasst wird (26).

9. Verfahren nach einem der vorhergehenden Ansprüche, bei dem die Schätzung der zweiten Lokalisierungsinformation auf Basis von Lokalisierungskoordinaten (LOC(CELL_ID_{T})) erfolgt, die der letzten Zelle zugeordnet sind, in der sich das Endgerät befindet.

10. Verfahren nach einem der vorhergehenden Ansprüche, bei dem die Schätzung der zweiten Lokalisierungsinformation die folgenden Unterschritte umfasst:
- Bestimmung einer Bewegungsbahn (D) des Endgeräts auf Basis von Lokalisierungskoordinaten (LOC(CELL_ID_{T-1}); LOC (CELL_ID_{T-2}); LOC(CELL_ID_{T-3})), die mindestens zwei Zellen zugeordnet sind, in denen das Endgerät vorher angeordnet war;
- Schätzung der zweiten Lokalisierungsinformation auf Basis der bestimmten Bahn.

11. Computerprogramm, umfassend Befehle für den Einsatz des Verfahrens nach einem der vorhergehenden Ansprüche, wenn diese Befehle von einem Prozessor ausgeführt werden.

12. Bearbeitungsserver (SERV), der an ein zellulares Mobilfunknetz angeschlossen ist, zur Überprüfung einer Lokalisierungsinformation eines Endgeräts (UE), das mit einem Sicherheitsmodul ausgestattet und in einer aktuellen Zelle angeordnet ist, wobei das Endgerät in dem Sicherheitsmodul eine Identität der aktuellen Zelle und mindestens eine Identität einer vorhergehenden Zelle, in der das Endgerät vorher angeordnet war, speichert;
wobei der Server mindestens einen Prozessor umfasst, der dazu vorgesehen ist, die folgenden Operationen auszuführen:
- Empfang der Identitäten von dem Endgerät über das Kommunikationsnetz;
- Bestimmung einer ersten Lokalisierungsinformation auf Basis der Identität der aktuellen Zelle;
- Schätzung einer zweiten Lokalisierungsinformation auf Basis der Identität mindestens einer vorhergehenden Zelle;
- Erfassung eines Lokalisierungsfehlers, wenn die zwei Lokalisierungsinformationen unterschiedlichen geografischen Positionen nach einem bestimmten Kriterium entsprechen.

13. System, umfassend einen Bearbeitungsserver (SERV) nach Anspruch 12 und einen Speicherserver, umfassend ein Zellidentitätsbezugssystem (REF), das durch ein Kommunikationsnetz an den Bearbeitungsserver angeschlossen ist, wobei der Speicherserver einen Prozessor umfasst, der dazu vorgesehen ist, die folgenden Operationen auszuführen:
- Empfang einer Anfrage, um Lokalisierungskoordinaten, die der aktuellen Zelle zugeordnet sind, und Lokalisierungskoordinaten, die der mindestens einen vorhergehenden Zelle zugeordnet sind, zu erhalten, wobei die Anfrage die Identität (CELL_ID_{T}) der aktuellen Zelle und die Identität (CELL_ID_{T-1}; CELL_ID_{T-2}; CELL_ID_{T-3}) der mindestens einen vorhergehenden Zelle umfasst;
- Senden einer Antwort auf die Anfrage, wobei die Antwort die Lokalisierungskoordinaten (LOC(CELL_ID_{T})), die der aktuellen Zelle zugeordnet sind, und die Lokalisierungskoordinaten (LOC(CELL_ID_{T-1}); LOC(CELL_ID_{T-2}); LOC (CELL_ID_{T-3})), die er mindestens einen vorhergehenden Zelle zugeordnet sind, umfasst, und
bei dem die erste Lokalisierungsinformation auf Basis der Lokalisierungskoordinaten, die der aktuellen Zelle zugeordnet sind, bestimmt wird, und die zweite Lokalisierungsinformation auf Basis der Lokalisierungskoordinaten, die der mindestens einen vorhergehenden Zelle zugeordnet sind, geschätzt wird.

14. Lokalisierungsvorrichtung, die in einem Endgerät enthalten ist, das mit einem Sicherheitsmodul ausgestattet ist, wobei das Endgerät an ein zellulares Mobilfunknetz angeschlossen ist und sich in einer aktuellen Zelle befindet, wobei das Endgerät in dem Sicherheitsmodul eine Identität der aktuellen Zelle (CELL_ID_{T}) und mindestens eine Identität einer vorhergehenden Zelle (CELL_ID_{T-1}; CELL_ID_{T-2}; CELL_D_{T-3}), in der das Endgerät vorher angeordnet war, speichert;
wobei die Vorrichtung einen Mikrokontroller umfasst, der dazu vorgesehen ist, die folgenden Schritte auszuführen:
- Empfang der Identitäten von dem Endgerät über das Kommunikationsnetz;
- Bestimmung einer ersten Lokalisierungsinformation auf Basis der Identität der aktuellen Zelle;
- Schätzung einer zweiten Lokalisierungsinformation auf Basis der Identität mindestens einer vorhergehenden Zelle;
- Erfassung eines Lokalisierungsfehlers, wenn die zwei Lokalisierungsinformationen unterschiedlichen geografischen Positionen nach einem bestimmten Kriterium entsprechen.

15. Vorrichtung nach Anspruch 14, bei der das Sicherheitsmodul in einer UICC-Karte des Endgeräts enthalten ist.

## Claims

1. Method for verifying an item of information on the location of a terminal (UE) provided with a UICC card, which terminal is connected to a cellular telecommunications network, and located in a current cell, said terminal memorizing, in the security module, an identifier (CELL_ID_{T}) of the current cell and at least one identifier (CELL_ID_{T-1}; CELL_ID_{T-2}; CELL_ID_{T-3}) of a preceding cell in which the terminal was previously located, said method including steps, implemented by a processing server (SERV) connected to said network, of:
- receiving (14) said identifiers arising from the terminal via the communication network;
- determining (22) a first item of location information on the basis of the identifier of the current cell;
- estimating (23) a second item of location information on the basis of the identifier of at least one preceding cell;
- detecting (24) a location error if the two items of location information correspond to different geographical positions according to a determined criterion.

2. Method according to Claim 1, in which the first item of location information includes a first set of location coordinates corresponding to a first geographical zone (V₁) covered by the current cell.

3. Method according to Claim 2, in which the second item of location information includes a second set of location coordinates corresponding to a second geographical zone covered by the cells that are adjacent to the last cell in which the terminal was located, and
in which the two items of location information correspond to different geographical positions according to a criterion determined according to the area of the intersection of the first and the second geographical zones.

4. Method according to Claim 3, in which said first and second items of location information correspond to different geographical positions when said area of intersection is smaller than a predefined threshold value.

5. Method according to Claim 4, in which said threshold value is chosen to correspond to the average area of a cell.

6. Method according to any one of the preceding claims, additionally including, following the reception step, steps of:
- sending (15), to a cell identifier frame of reference (REF), a request to obtain location coordinates associated with the current cell and location coordinates associated with said at least one preceding cell, said request including the identifier (CELL_ID_{T}) of the current cell and the identifier (CELL_ID_{T-1}; CELL_ID_{T-2}; CELL_ID_{T-3}) of said at least one preceding cell;
- receiving a response to said request, the response including the location coordinates (LOC(CELL_ID_{T})) associated with the current cell and the location coordinates (LOC(CELL_ID_{T-1}) ; LOC(CELL_ID_{T-2}) ; LOC(CELL_ID_{T-3})) associated with said at least one preceding cell; and
in which the first item of location information is determined on the basis of the location coordinates associated with the current cell; and the second item of location information is estimated on the basis of the location coordinates associated with said at least one preceding cell.

7. Method according to Claim 6, additionally including, following the step of detecting a location error, a following step of updating the frame of reference:
- in the event that a location error is detected, the location coordinates associated with the identifier of the current cell in the cell identifier frame of reference are replaced by the second item of location information.

8. Method according to either of Claims 6 and 7, additionally including a step of transmitting the first item of location information if no location error is detected (25) and a step of transmitting the second item of location information if a location error is detected (26).

9. Method according to one of the preceding claims, in which the second item of location information is estimated on the basis of location coordinates (LOC(CELL_ID_{T})) that are associated with the last cell in which the terminal was located.

10. Method according to one of the preceding claims, in which the estimation of the second item of location information includes sub-steps of:
• determining a movement trajectory (D) of the terminal on the basis of location coordinates (LOC (CELL_ID_{T-1}) ; LOC (CELL_ID_{T-2}) ;
LOC(CELL_ID_{T-3}) ) that are associated with at least two cells in which the terminal was previously located;
• estimating the second item of location information on the basis of said determined trajectory.

11. Computer **program** including instructions for implementing the method according to any one of the preceding claims, when these instructions are executed by a processor.

12. **Processing server** (SERV) connected to a cellular telecommunications network for verifying an item of information on the location of a terminal (UE) provided with a security module and located in a current cell, said terminal memorizing, in said security module, an identifier of the current cell and at least one identifier of a preceding cell in which the terminal was previously located,
said server including at least one processor designed to perform operations of:
- receiving said identifiers arising from the terminal via the communication network;
- determining a first item of location information on the basis of the identifier of the current cell;
- estimating a second item of location information on the basis of the identifier of at least one said preceding cell;
- detecting a location error if the two items of location information correspond to different geographical positions according to a determined criterion.

13. System comprising a processing server (SERV) according to Claim 12 and a **storage server** including a cell identifier frame of reference (REF), connected by a communications network to the processing server, said storage server including a processor designed to perform operations of:
- receiving a request to obtain location coordinates associated with the current cell and location coordinates associated with said at least one preceding cell, said request including the identifier (CELL_ID_{T}) of the current cell and the identifier (CELL_ID_{T-1}; CELL_ID_{T-2}; CELL_ID_{T-3}) of said at least one preceding cell;
- sending a response to said request, the response including the location coordinates (LOC(CELL_ID_{T})) associated with the current cell and the location coordinates (LOC(CELL_ID_{T-1}); LOC(CELL_ID_{T-2}); LOC(CELL_ID_{T-3})) associated with said at least one preceding cell; and
in which the first item of location information is determined on the basis of the location coordinates associated with the current cell; and the second item of location information is estimated on the basis of the location coordinates associated with said at least one preceding cell.

14. Location **device** comprised in a terminal provided with a security module, the terminal being connected to a cellular telecommunications network, and located in a current cell, said terminal memorizing, in the security module, an identifier (CELL_ID_{T}) of the current cell and at least one identifier (CELL_ID_{T-1}; CELL_ID_{T-2}; CELL_ID_{T-3}) of a preceding cell in which the terminal was previously located,
the device including a microcontroller designed to carry out steps of:
- receiving said identifiers arising from the terminal via the communication network;
- determining a first item of location information on the basis of the identifier of the current cell;
- estimating a second item of location information on the basis of the identifier of at least one said preceding cell;
- detecting a location error if the two items of location information correspond to different geographical positions according to a determined criterion.

15. Device according to Claim 14, in which said security module is comprised in a UICC card of said terminal.
